# EUROPEAN PATENT APPLICATION

(11) **EP 3 492 703 A1**
(43) Date of publication of application: **05.06.2019**
(21) Application number: 17204403.4
(22) Date of filing: 29.11.2017
(51) Int. Cl.: F01D 5/30, F01D 21/00, G01N 3/08, F01D 25/28, F01D 5/08, G01N 3/32

(54) **METHOD OF TESTING A ROTOR COMPONENT DESIGN**

(71) Applicant: Siemens Aktiengesellschaft, 80333 München (DE)
(72) Inventor: Osborne, Mark, Harmston, Lincoln LN5 9SL (GB); Pan, Wenke, Welton, Lincoln LN2 3UB (GB)
(74) Representative: Maier, Daniel Oliver

(57) **Abstract**

A method of testing a rotor component design for a turbo machine. The method comprises the steps of producing a rotor blade test piece (110) having a test piece root portion (112) which has the same design as the root portion (106) of the rotor blade (100), and a test piece tool body (116) coupled to the test piece root portion (112). A fatigue characteristic of the test piece root portion (112) is determined by fixing the test piece root portion (112) to a first receiving part (114), fixing the test piece tool body (116) to a second receiving part (130), and inducing a force on the test piece using the first receiving part (114) and/or second receiving part (130) to thereby perform a fatigue test on the test piece root portion (112) in order to determine the fatigue characteristic of the root portion (106).

## Description

The present disclosure relates to a method of testing, a method of manufacturing and a test piece.

In particular the disclosure is concerned with a method of testing a rotor component design for a turbo machine.

### Background

Gas turbines generally include a turbine section with a number of rows of rotating rotor blades which are fixed to a rotor shaft and rows of stationary vanes between the rows of rotor blades which are fixed to the casing of the gas turbine. When a hot and pressurized working fluid flows through the rows of vanes and blades it transfers momentum to the rotor blades and thus imparts a rotary motion to the rotor while expanding and cooling. The vanes are used to control the flow of the working medium so as to optimize momentum transfer to the rotor blades.

A typical gas turbine rotor comprises rotor blades and a rotor disc. Each rotor blade has a root portion by which it is fixed to a disc portion of the rotor disc, and an aerofoil portion which allows a transfer of momentum when the hot and pressurized working fluid flows past the aerofoil portion.

Rotor blades tend to be hollow, for example comprising a plenum through which cooling air is forced. The plenum may be divided by internal walls which are formed integrally with the aerofoil structure. The rotor blades may be produced by a precise casting, checking and finishing process, which is necessarily labour intensive in order to ensure that all the features of the rotor blades have been produced according to a pre-determined and desired design. Likewise design, testing and manufacture of the rotor disc is equally painstaking.

Although the casting process is critical, the manufacturing process includes many other steps prior to casting stage. For example prior to manufacture of "production" standard rotor blades or rotor discs, development designs considered and refined through the design and manufacturing process must be extensively modelled and empirically tested before entering the production phase of the manufacturing process. Conventionally, development rotor components are produced by the same processes as production parts (e.g. casting), which is time-consuming and expensive. Before the operational characteristics of the development rotor blade can be assessed, it must first be analysed to determine if it meets basic structural integrity requirements. If such analysis indicates that a design flaw exists, then a replacement development part must be manufactured using the same conventional (and perhaps) time-consuming manufacturing process. The replacement development part must then also be subject to the same structural integrity analysis, and so the process is repeated until the development part may proceed to more extensive testing which ultimately will lead to the production of a rotor component that can be used in service in a turbo machine.

Hence conventional manufacturing methods including technical verification steps are necessarily thorough, but also can lead to significant delay if modifications to the design are required, as these modifications must also be tested before the manufacturing method can move from the development to production phase.

Hence a method of testing and manufacturing a rotor component, and a test piece component used as part of the testing process, which reduces the amount of time taken to test design modifications, are highly desirable.

### Summary

According to the present disclosure there is provided a method of testing, a method of manufacturing and a test piece as set forth in the appended claims. Other features of the invention will be apparent from the dependent claims, and the description which follows.

Accordingly there is provided a method of testing a rotor component design for a turbo machine. The rotor component design may comprise a rotor blade having a root portion 106. The method may comprise the steps of producing a rotor blade test piece 110 having a test piece root portion 112 which has the same design as the root portion 106 of the rotor blade 100; and a test piece tool body 116 coupled to the test piece root portion 112. The method may comprise the steps of determining a fatigue characteristic of the test piece root portion 112 by fixing the test piece root portion 112 to a first receiving part 114, fixing the test piece tool body 116 to a second receiving part 130; and inducing a force on the test piece using the first receiving part 114 and/or second receiving part 130 to thereby perform a fatigue test on the test piece root portion 112 in order to determine the fatigue characteristic of the root portion 106.

The method may further comprise the steps of determining a desired fatigue characteristic of the root portion 106 of the rotor blade; and comparing the fatigue characteristic of the test piece root portion 112 to the desired fatigue characteristic of the rotor blade design root portion 106 to thereby determine if the rotor blade design root portion 106 has the desired fatigue characteristic.

The rotor component design further may further comprise a turbine disc design 90. The first receiving part 114 may comprise a test piece root attachment region 120 to receive the test piece root portion 112 having the same design as a root attachment region 109 on the turbine disc design 90 to receive the rotor blade 100; and a receiving part tool body 122 extending from the test piece root attachment region 120. The method may comprise the step of inducing a force on the test piece root attachment region 120 via the first receiving part tool body 122 and/or second receiving part 130 to thereby perform a fatigue test on the test piece root attachment region 120 in order to determine the fatigue characteristic of the root attachment region 109.

The method may further comprise the steps of determining a desired fatigue characteristic of the root attachment region 120 of the turbine disc design; and comparing the fatigue characteristic of the test piece root attachment region 120 to the desired fatigue characteristic of the turbine disc design root attachment region 109 to thereby determine if the turbine disc root attachment region 106 has the desired fatigue characteristic.

The method may further comprise the step of coupling the first receiving part 114 and/or second receiving part 130 to a fatigue testing machine operable to induce a force on the test piece 110 via the first receiving part 114 and/or second receiving part 130.

The rotor component design may comprise a platform portion 108 which extends from the root portion 112, and the rotor blade test piece 110 comprises a test piece platform portion 118 which extends from the test piece root portion 112 and has the same design as the platform portion 108 of the rotor component, wherein the test piece tool body 116 is coupled to the test piece root portion 112 via the test piece platform 118.

The rotor component design may comprise an aerofoil portion 104 which extends from the platform portion 108; the rotor blade test piece 110 comprising a test piece aerofoil portion 132 which extends from the test piece platform portion 118 and has the same design as at least part of the aerofoil portion 104 of the rotor blade 100, wherein the test piece tool body 116 is coupled to the test piece root portion 112 via the test piece aerofoil portion 132.

The rotor component design may comprise a cooling passage 101 that extends through the rotor component 100, the rotor blade test piece 110 comprising a cooling passage 134 which extends through the test piece root portion 112 and has the same design as the cooling passage 101 of the rotor blade 100.

The turbine disc design 90 may comprise a cooling passage 101 that extends through the turbine disc root attachment region 109; the first receiving part root attachment region 120 comprising a cooling passage 136 which extends through the test piece root attachment portion 120 and has the same design as the cooling passage 101 of the turbine disc root attachment region 100.

The method may further comprise the step of flowing cooling air through the cooling passages 134, 136 during the fatigue test.

The method may comprise the step of the test piece 110 being heated during the fatigue test.

The test piece 110 and the first receiving part 114 may be integrally formed by an additive manufacturing process.

There may also be provided a method of manufacturing a rotor component for a turbo machine, comprising a method of testing according to any preceding claim; and manufacturing the rotor component design according to the rotor component design. There may also be provided a test piece assembly for testing a rotor component design the rotor component design comprising a rotor blade having a root portion 106; the test piece 110 assembly comprising a rotor blade test piece 110 having a test piece root portion 112 which has the same design as the root portion 106 of the rotor blade 100, and a test piece tool body 116 coupled to the test piece root portion 112.

The rotor component design may further comprise a turbine disc design 90; the first receiving part 114 comprises a test piece root attachment region 120 to receive the test piece root portion 112 having the same design as a root attachment region 109 on the turbine disc design 90 configured to receive the rotor blade 100; and a receiving part tool body 122 extending from the root attachment region 120.

Hence there is provided a method and component (i.e. test piece) which enables representative testing of rotor component for a turbine of a gas turbine engine. This is because a test component can be produced with features relevant to the testing being conducted, as required, as well as features required to mount and induce forces on the component.

Additionally the test pieces of the present disclosure can be produced much more quickly and cheaply than conventional manufacturing methods permit, consequently allowing more for a more rapid component testing programme.

### Brief Description of the Drawings

Examples of the present disclosure will now be described with reference to the accompanying drawings, in which:
Figure 1 shows a schematic representation of an example of a turbo machine;
Figure 2 shows an enlarged region of a section of a turbine of the turbo machine shown in Figure 1;
Figure 3 shows an end view of rotor blades and rotor disc shown in Figures 1, 2;
Figure 4 shows a side view of a rotor blade test piece according to the present disclosure;
Figure 5 shows a different view of the rotor blade test piece as shown in figure 4;
Figure 6 shows a side view of a part for supporting the rotor blade test piece;
Figure 7 shows a test apparatus according to the present disclosure.

### Detailed Description

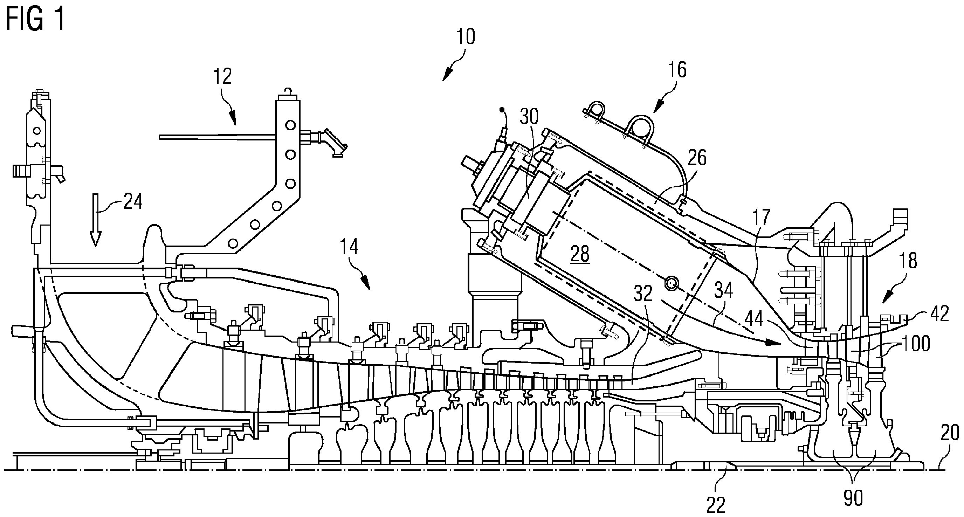

By way of context, Figure 1 shows an example of a gas turbine engine 10 in a sectional view, which illustrates the nature of rotor blades and the environment in which they operate. The gas turbine engine 10 comprises, in flow series, an inlet 12, a compressor section 14, a combustion section 16 and a turbine section 18, which are generally arranged in flow series and generally in the direction of a longitudinal or rotational axis 20. The gas turbine engine 10 further comprises a shaft 22 which is rotatable about the rotational axis 20 and which extends longitudinally through the gas turbine engine 10. The rotational axis 20 is normally the rotational axis of an associated gas turbine engine. Hence any reference to "axial", "radial" and "circumferential" directions are with respect to the rotational axis 20.

The shaft 22 drivingly connects the turbine section 18 to the compressor section 14. In operation of the gas turbine engine 10, air 24, which is taken in through the air inlet 12 is compressed by the compressor section 14 and delivered to the combustion section or burner section 16. The burner section 16 comprises a burner plenum 126, one or more combustion chambers 28 defined by a double wall can 80 and at least one burner 30 fixed to each combustion chamber 28. The combustion chambers 28 and the burners 30 are located inside the burner plenum 126. The compressed air passing through the compressor section 14 enters a diffuser 32 and is discharged from the diffuser 32 into the burner plenum 126 from where a portion of the air enters the burner 30 and is mixed with a gaseous or liquid fuel. The air/fuel mixture is then burned and the combustion gas 34 or working gas from the combustion is channelled via a transition duct 17 to the turbine section 18.

The turbine section 18 may comprise a number rotors, each having a blade carrying disc 90 or turbine wheel attached to the shaft 22. In the example shown, the turbine section 18 comprises two discs 90 which each carry an annular array of aerofoils embodied as a turbine blade 100. Turbine cascades 44 are disposed between the turbine blades 100. Each turbine cascade 44 carries an annular array of turbine assemblies which each comprises an aerofoil in the form of guiding vanes (i.e. stator vanes 96), which are fixed to a stator 42 of the gas turbine engine 10.

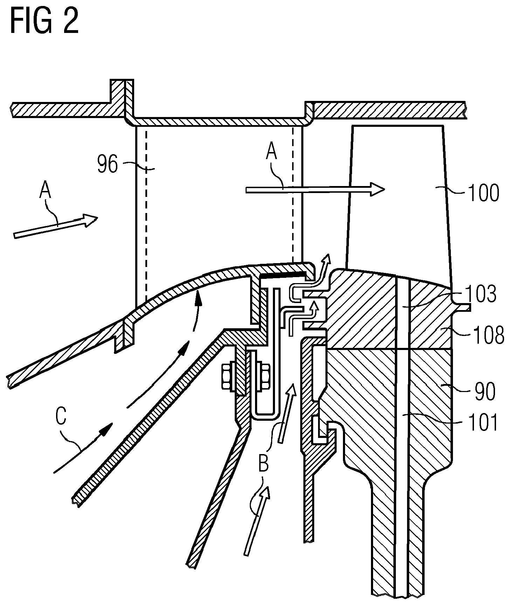

Figure 2 shows an enlarged view of a stator vane 96 and rotor blade 100. Arrows "A" indicate the direction of flow of combustion gas 34 past the aerofoils 96,100. Arrows "B" show air flow passages provided for sealing, and arrows "C" indicate cooling air flow paths for passing through the stator vanes 96. Cooling flow passages 101 may be provided in the rotor disc 90 which extend radially outwards to feed an air flow passage 103 in the rotor blade 100.

The combustion gas 34 from the combustion chamber 28 enters the turbine section 18 and drives the turbine blades 100 which in turn rotate the shaft 22 to drive the compressor. The guiding vanes 96 serve to optimise the angle of the combustion or working gas 34 on to the turbine blades.

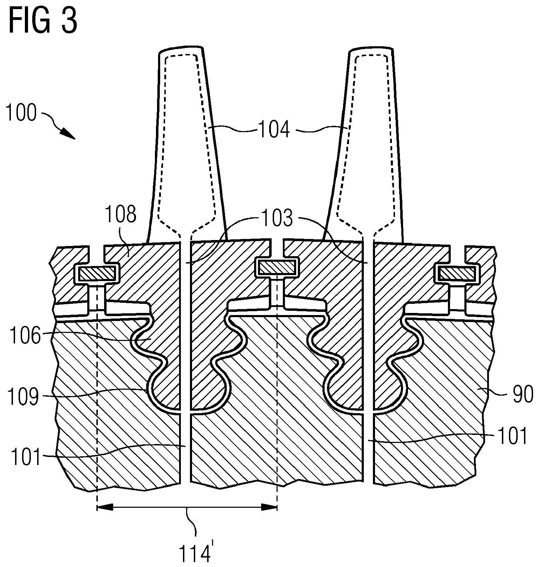

Figure 3 shows a view of the rotor blades 100 looking upstream facing the flow "A" shown in Figure 2.

Each rotor blade 100 comprises an aerofoil portion 104, a root portion 106 and a platform 108. The platform 108 is located between the aerofoil portion 104 and the root portion 106.

The rotor blades 100 are fixed to the rotor disc 90 by means of their root portions 106. The root portions 106 have a shape that corresponds to notches (or grooves) 109 in the rotor disc 90, and are configured to prevent the rotor blade 100 from detaching from the rotor disc 90 in a radial direction as the rotor disc 90 spins. The root portion 106 and notches 109 are hence configured to resist huge centrifugal forces during operation of the engine. The present disclosure relates to the design, testing and manufacture of the root portion features of rotor blades and notch features of rotor discs.

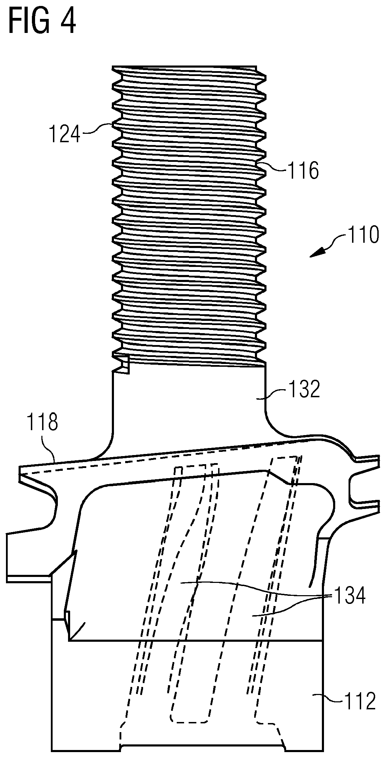

The method and test piece according to the present disclosure will now be described with reference to Figures 4 to 7.

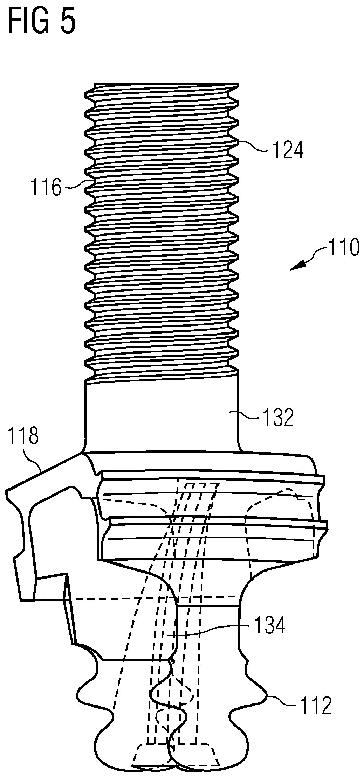

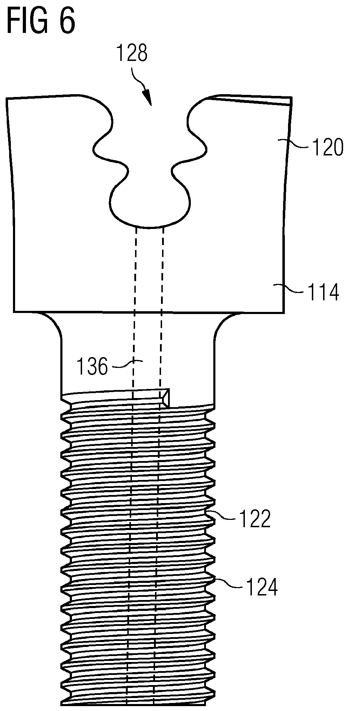

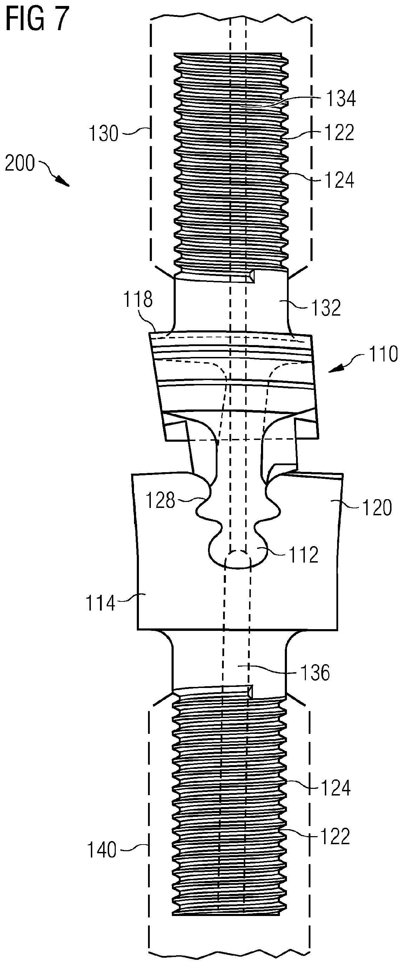

Figures 4, 5 show different views of a rotor blade test piece 110, Figure 6 shows a receiving part 114 for supporting the rotor blade test piece 110, and Figure 7 shows a rotor test assembly 200 comprising the rotor blade test piece 110 and receiving part 114.

The test piece 110 is configured for testing physical properties (for example fatigue characteristics) of a rotor blade for a turbo machine. In particular the test piece 110 is configured for testing physical properties of a rotor blade root for a turbo machine. That is to say, the test piece 110 is configured for testing physical properties of a development and/or production rotor blade root design and rotor disc design.

As best shown in Figures 4, 5 the rotor blade test piece 110 comprises a test piece root portion 112 for linking with a first receiving part 114 shown in Figures 6, 7. That is to say, the root portion 112 has the same design (that is to say the same size and geometry) as a root portion 106 of a rotor blade design 100 which it is configured to simulate for the purposes of development testing.

The root portion 112 or the test piece 110 may vary in features and relative dimensions to that shown in Figures 4 to 7, but in practice will match in size, geometry and tolerance the blade root design of the development rotor blade design.

In the example shown, the rotor blade test piece 110 comprises a test piece platform portion 118 which extends from the test piece root portion 112 and has the same design as the platform portion 108 of the rotor component. In other examples (not shown), the test piece platform may not be not included.

The rotor blade test piece 110 has a test piece tool body 116 coupled to the root portion 112. In the example shown, the test piece tool body 116 is coupled to the root portion 112 via the test piece platform portion 118. The test piece tool body 116 has a higher material strength than the test piece root portion 112 and the test piece platform portion 118.

The rotor blade test piece 110 comprises a test piece aerofoil portion 132 which extends from the test piece platform portion 118 and has the same design as at least part of the aerofoil portion 104 of the rotor blade 100. That is to say, the aerofoil portion 132 of the test piece may be geometrically similar to only a part (i.e. subset) of the aerofoil portion of the rotor blade 100 on which it is based. Hence the test piece tool body 116 is coupled to the test piece root portion 112 via the test piece aerofoil portion 132. In other examples, not shown, the test piece aerofoil portion 132 may not be included.

As shown in Figure 3, the rotor component design further comprises one or more cooling passages 103 that extend through the rotor blade 100. The rotor blade test piece 110 may comprise one or more cooling passages 134 which extend through the test piece root portion 112 and have the same design as the cooling passage 103 of the rotor blade 100. The cooling passage 134 may extend all of the way from the test piece root portion 112 to an outlet (not shown) on the test piece platform 18, aerofoil 132 and/or test piece tool body 116.

In other examples, not shown, the cooling passage 134 may not be included.

As shown in Figure 7, the test assembly comprises a first receiving part 114. In the example shown, the first receiving part 114 comprises a test piece root attachment region 120 and a receiving part tool body 122.

The tool bodies 116, 122 may comprise ridges 124 for engagement with mounts 130, 140 described in relation to Figure 7. The ridges may take the form of a screw thread.

The test piece root attachment region 120 has the same design as a root attachment region 109 on the turbine disc design 90 which receives the rotor blade 100. The receiving part tool body 122 extends from the test piece root attachment region 120.

When assembled, the root portion 112 is located within a receiving groove 128 provided in the receiving part 114. The receiving groove 128 is provided with the same design, geometry and tolerances as the equivalent groove 109 in the turbo machinery design which is being simulated.

Hence, for example, the receiving part 114 shown in Figures 6, 7 may be configured to simulate a section 114' of a rotor disc 90 akin to that shown in Figure 3, where the section 114' extends to either side of a root groove 109 provided in the disc 90. Additionally, as described above in relation to Figure 3, the turbine disc design may comprise a cooling passage 101 that extends through the turbine disc 90. To simulate this, the first receiving part 114 may thus also comprise a cooling passage 136 which extends through the test piece root attachment portion 120 and first receiving part tool body 122, and has the same design as the cooling passage 134 of the turbine disc root attachment region 100.

When assembled, the cooling passage 136 of the first receiving part 114 and cooling passage 134 of the test piece 110 are aligned and in fluid communication with one another to permit the flow of cooling air through the first receiving part to, and through, the test piece 110.

The geometry and relative dimensions of the blade root 112 and rotor disc groove 128 for receiving the blade root 112 are shown for illustrative purposes only, and are not limited to the illustrated design of the test piece 110 of the present disclosure, nor the rotor blade 100, turbine disc 90 or receiving part 114 designs illustrated in the present disclosure.

The rotor blade test piece 110 may be integrally formed. This means that the test piece root portion 112, the test piece platform portion 118 and the test piece tool body are formed to be a single piece, with no fabrication joints between them.

The first receiving part 114 may also be integrally formed. This means that the test piece root attachment region 120 and the receiving part tool body 122 are formed as a single piece, with no fabrication joints between them.

The rotor blade test piece 110 and/or first receiving part 114 may be produced by an additive manufacturing process.

Additive manufacturing refers to processes used to create a three dimensional object in which layers of material are formed, under computer control, to create an object. Additive manufacturing, for example selective laser melting, provides a quick way to create an object for testing. Hence the test piece and development rotor blade may be manufactured by selective laser melting, or a different additive manufacturing technique.

Thus the test piece and development rotor blade can be manufactured relatively quickly compared to a conventional casting process. Although the final production rotor blade design, upon which the test piece is based, may be produced with a conventional casting process, it may also be produced by an alternative manufacturing process. For example the production rotor blade may also be manufactured by an additive manufacturing process.

Hence the method further comprises the step of providing (for example manufacturing) the test piece 110 and receiving part 114, as described above, by an additive manufacturing technique. The tool body 116 is configured to have a higher strength than the root portion 112 of the test piece 110, and hence also higher than the strength of the rotor blade root design. This is so that, during testing, it is the root portion 112 which will fail in preference to the tool body portion 116.

The method also comprises the steps of determining physical properties of the test piece root portion. This is achieved by fixing the root portion 112 of the test piece 110 into the receiving groove 128 of the receiving part 114.

That is to say, the test piece root portion 112 is fixed to the first receiving part 114. More specifically, the test piece root attachment region 120 receives the test piece root portion 112, in the same manner as the root attachment region 109/114' receives the root portion 106 in the rotor component design being simulated.

During testing, and as shown in Figure 7, the tool body 122 of the first receiving part 114 is coupled to a first mount 140 of fatigue test machine (not shown). The test piece tool body 116 of the test piece 110 is coupled to a second receiving part 130 (i.e. a second mount) of the same fatigue test machine. The fatigue test machine is a tension loading machine. The mounts 130, 140 are configured to engage with and/or grip the tool bodies 116, 122. Features which co-operate with the tool body ridges 124 may be provided in the mounts 130, 140 for engagement with the ridges 124.

Forces are induced in the test assembly 200 via the first mount 140 and second mount 130 using the fatigue test machine. This induces forces in the test piece root portion 112 (and where present) the test piece platform portion 118 and the receiving groove 128 of the test piece root attachment region 120, thereby performing fatigue tests on both the simulated rotor blade (rotor blade test piece) and the simulated rotor disc portion (e.g. first receiving part 114).

The fatigue tests may be performed in a furnace (not shown) which heats the test assembly 200 during the fatigue test, with the temperature in the furnace set to mimic turbine blade root operational conditions (for example, temperatures that the turbine blade root will experience during use in an engine).

Additionally the method may further comprise the step of flowing cooling air through the cooling passage(s) 134, 136 during the fatigue test. When used in conjunction with the furnace heating, the supply of cooling air more accurately simulates engine operating conditions and thermal gradients throughout the component being tested as these will impact on the fatigue characteristics of the test pieces. Hence the fatigue test may be conducted with the same cooling air flow rate as that delivered during engine operation.

Fatigue characteristics of the test piece root portion 112 (and where present) the test piece platform region 118 and the test piece root attachment region 120 may then be determined from the fatigue tests. The test pieces 110, 114 may be disassembled after certain cycles and then checked, for example to determine if there are any cracks by use of non-destructive methods such as a fluorescent penetrant inspection technique. If there is no crack found, then the fatigue test may be repeated. The thermal fatigue life may be obtained by repeating the process until certain size of crack is found.

A desired fatigue characteristic of the root portion 106 of the rotor blade is determined, for example from a look-up table, empirical experience/analysis and/or computer modelling. Additionally, a desired fatigue characteristic of the platform portion of the rotor blade, and/or a desired fatigue characteristic of the root attachment region of the turbine disc design may be determined in the same way.

The fatigue characteristics of the test pieces 112, 114 may then be compared to the desired fatigue characteristic of the rotor blade design and rotor disc design to thereby determine if the rotor blade design root portion 106 has the desired fatigue characteristic.

Hence the fatigue characteristics of the features of the test piece 110 (i.e. root portion 112, platform region 118 and/or aerofoil portion 132) may then be compared to the desired fatigue characteristic of the rotor blade design to thereby determine if the rotor blade design root portion 106 has the desired fatigue characteristic.

Likewise fatigue characteristics of the features of the first receiving part 114 may then be compared to the desired fatigue characteristic of the rotor disc 90 to thereby determine if the rotor disc design has the desired fatigue characteristic.

That is to say, the fatigue characteristic of the test piece root attachment region 120 may then be compared to the desired fatigue characteristic of the turbine disc design root attachment region 109 to thereby determine if the turbine disc root attachment region 109 has the desired fatigue characteristic.

Following a fatigue test in which the characteristics are observed to acceptable, the rotor component may be manufactured according to the rotor component design or taken to the next development stage. If the results are not as desired, the rotor component design may be refined.

Put another way, the determined physical properties of the test pieces 110, 114 demonstrates the actual physical properties of the development rotor blade design and rotor disc design respectively. Hence it may be determined if features of the test pieces 110, 114 have the desired physical properties of the features of the development rotor blade design and rotor disc respectively on which they are based. Thus informed by the comparison, the development rotor blade and/or rotor disc may be manufactured by an additive manufacturing technique to the rotor blade design and rotor disc design respectively.

Put another way, features of the test pieces 110, 114 are tested to verify that the rotor blade design and/or rotor disc respectively meet certain criteria. Once it is determined that those criteria are met, a development rotor blade and/or development rotor disc respectively may be manufactured by an additive manufacturing technique in order to provide a development rotor blade and/or development rotor disc, which is of the same design as the intended production rotor blade or production rotor disc respectively, thus enabling testing of features of the production blade design and/or production rotor disc design respectively by testing the same feature of the development rotor blade and/or rotor disc respectively made by additive manufacturing.

Hence there is provided a method of manufacturing a rotor blade for a turbo machine, where the rotor blade may be a development rotor blade configured to have the same design shape and geometry as a production rotor blade for the turbo machine. The method of manufacturing includes the step of verifying the rotor blade design, and in particular the method of manufacturing includes the step of verifying the rotor blade root design. Hence the method comprises a step of determining desired physical properties of a root portion of a rotor blade design.

Hence the present invention provides a means for testing features of a development part such that the development part may proceed more quickly to evaluation. Thus additive manufacturing allows the test piece to be manufactured and replacement test pieces manufactured equally quickly to respond to any design modifications required during evaluation of the rotor blade features.

Hence the method of the present disclosure is beneficial, as the test pieces, which have features the same as the design, can be produced much more quickly and cheaply than a development component made by a conventional method. So, for example, the test piece having the same design as rotor blade means that the effect of rotor blade design on fatigue performance can be tested, so using this method allows different rotor blade designs to be tested for fatigue performance, allowing decisions to be made on which rotor blade designs are to be taken to further stages of testing and/or production.

Thus a rotor blade design may be manufactured, that is to say "reduced to practice", by means of testing on a test piece 110, where the test piece has a feature (the root portion 112) which has the same geometry, size and shape as the root portion 106 on the rotor blade design. Having determined the desired physical properties of the root portion 106 of the rotor blade 100, and gathered information on the physical characteristics of the root portion 112 of the test piece 110 by virtue of an empirical experiment (for example a fatigue test) it can be determined if the root portion 106 of the rotor blade 100 has necessary physical characteristics in order to increase confidence in the capability of the development rotor blade design comprising the root portion design to be manufactured and tested.

Since the test pieces 110, 114 and the development rotor blade are produced by an additive manufacturing technique, they may be produced relatively quickly. Hence, for example, if testing of the test piece 110 reveals a design flaw, the root portion 112 can be modified and created by additive manufacturing until a test piece design with the desired properties has been created. The desired features of the test piece design can then be utilised in creating the design of the development rotor blade, which is also produced by additive manufacturing, and then the development rotor blade itself may be tested in a variety of ways to determine if it meets predetermined structural and operational requirements.

Hence there is also provided a method of manufacturing which includes a method of generating a design for a rotor blade for a turbo machine. The method of generating a design may include the step of producing the test pieces 110, 114 for empirical analysis of the root portion 112. The test piece 110 may comprise root portion 112, platform 118 and a small transition portion between platform 118 and tool body 116 (with internal cooling passage 134 and threads 124). The design features of the root portion 112, platform 118, as well as the extended root portion between 112 and 118 are configured to be exactly the same as that of a real blade design.

Thus the rotor blade design may be verified. A final production design may then be produced on the basis of this verification process. The production blade may be manufactured by an additive manufacturing technique, or an alternative manufacturing technique (for example a conventional casting process).

Hence there is provided a method of manufacture of a rotor blade for turbo machinery, which may include the steps of producing a development rotor blade for development testing, and steps of producing a test piece for initial testing of features of the development rotor blade design.

Provision of a test piece 110 and receiving part 114 by an additive manufacturing technique massively simplifies the test of the critical mounting features of the rotor blade design. The test piece is not configured for all types of testing for the rotor blade design, rather it is intended to determine physical properties of the root portion of the rotor blade design and groove of the rotor disc. However, the development rotor blade made by additive manufacturing technique may be used in a wider range of blade testing, for example rotational and thermal testing, and even engine testing. Hence the provision of a test piece by an additive manufacturing technique, according to the present disclosure, as part of the manufacturing method allows for greater confidence that the development rotor blade has adequate structural integrity to stay mounted to the rotor disc.

Increased confidence that the rotor blade and disc will survive testing is important as it may reduce development times and avoid risk of damage to test equipment, especially in instances where the development blade and disc is intended for use in an over speed test.

Hence there is provided a method and component (i.e. test piece) which enables representative testing of rotor component for a turbine of a gas turbine engine. This is because a test component can be produced with features relevant to the testing being conducted, as required, as well as features required to mount and induce forces on the component.

The test pieces of the present disclosure can be produced much more quickly and cheaply than conventional manufacturing methods permit, consequently allowing more for a more rapid component testing programme. Additionally since the test pieces of the present disclosure may be integrally formed, for example using an additive manufacturing technique, then the test piece is inherently free of fabrication flaws, for example compared to a conventional fabricated test piece made from several parts which consequently need to be fitted/joined together, perhaps with subsequent machining. Also an integrally formed test piece of the present disclosure will result in more representative test results than conventional fatigue testing methods using a simplified test piece geometry.

The test piece root portion having the same design as the root portion of the rotor blade means that the effect of root portion design on fatigue performance can be accurately tested. Hence the method of the present disclosure allows different root portion designs to be tested for fatigue performance, allowing decisions to be made on which root portion designs are to be taken to further stages of testing and/or production.

Likewise the test piece root attachment region of the first receiving part having the same design as root attachment region on the turbine disc design means that the effect of root attachment region design on fatigue performance can be accurately tested. Using this method allows different root attachment region designs to be tested for fatigue performance, allowing decisions to be made on which root attachment region designs are to be taken to further stages of testing/production.

The method of the present disclosure is also advantageous as the test piece can be produced with whichever features of the rotor design may have an impact on the fatigue performance of the design. For example a platform or aerofoil portion may be added to the test piece structure so that all significant structural features of the rotor design which may have an impact on fatigue performance may be included as part of the test.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of testing a rotor component design for a turbo machine,
the rotor component design comprising a rotor blade having a root portion (106);
the method comprising the steps of :
producing a rotor blade test piece (110) having :
a test piece root portion (112)
which has the same design as the root portion (106) of the rotor blade (100); and
a test piece tool body (116) coupled to the test piece root portion (112);
determining a fatigue characteristic of the test piece root portion (112) by :
fixing the test piece root portion (112) to a first receiving part (114),
fixing the test piece tool body (116) to a second receiving part (130); and
inducing a force on the test piece using the first receiving part (114) and/or second receiving part (130) to thereby perform a fatigue test on the test piece root portion (112) in order to determine the fatigue characteristic of the root portion (106).

2. A method of testing as claimed in claim 1, further comprising the steps of :
determining a desired fatigue characteristic of the root portion (106) of the rotor blade; and
comparing the fatigue characteristic of the test piece root portion (112) to the desired fatigue characteristic of the rotor blade design root portion (106) to thereby determine if the rotor blade design root portion (106) has the desired fatigue characteristic.

3. A method of testing as claimed in claim 1 or claim 2, wherein :
the rotor component design further comprises a turbine disc design (90);
the first receiving part (114) comprises :
a test piece root attachment region (120) to receive the test piece root portion (112)
having the same design as a root attachment region (109) on the turbine disc design (90) to receive the rotor blade (100); and
a receiving part tool body (122) extending from the test piece root attachment region (120);
the method comprising the step of :
inducing a force on the test piece root attachment region (120) via the first receiving part tool body (122) and/or second receiving part (130) to thereby perform a fatigue test on the test piece root attachment region (120) in order to determine the fatigue characteristic of the root attachment region (109).

4. A method of testing as claimed in claim 3, further comprising the steps of :
determining a desired fatigue characteristic of the root attachment region (120) of the turbine disc design; and
comparing the fatigue characteristic of the test piece root attachment region (120) to the desired fatigue characteristic of the turbine disc design root attachment region (109) to thereby determine if the turbine disc root attachment region (106) has the desired fatigue characteristic.

5. A method of testing as claimed in any one of the preceding claims wherein
the method further comprises the step of
coupling the first receiving part (114) and/or second receiving part (130) to a fatigue testing machine operable to induce a force on the test piece (110) via the first receiving part (114) and/or second receiving part (130).

6. A method of testing as claimed in any one of the preceding claims wherein
the rotor component design comprises :
a platform portion (108) which extends from the root portion; and
the rotor blade test piece (110) comprises
a test piece platform portion (118) which extends from the test piece root portion (112) and has the same design as the platform portion (108) of the rotor component,
wherein the test piece tool body (116) is coupled to the test piece root portion (112) via the test piece platform (118).

7. A method of testing as claimed in claim 6 wherein
the rotor component design comprises :
an aerofoil portion (104) which extends from the platform portion (108);
the rotor blade test piece (110) comprising :
a test piece aerofoil portion (132) which extends from the test piece platform portion (118) and has the same design as at least part of the aerofoil portion (104) of the rotor blade (100),
wherein the test piece tool body (116) is coupled to the test piece root portion (112) via the test piece aerofoil portion (132).

8. A method of testing as claimed in any one of the preceding claims, wherein
the rotor component design comprises :
a cooling passage (103) that extends through the rotor component (100),
the rotor blade test piece (110) comprising :
a cooling passage (134) which extends through the test piece root portion (112) and has the same design as the cooling passage (103) of the rotor blade (100).

9. A method of testing as claimed in any one of claims 3 to 8, wherein
the turbine disc design (90) comprises :
a cooling passage (101) that extends through the turbine disc root attachment region (109);
the first receiving part root attachment region (120) comprising
a cooling passage (136) which extends through the test piece root attachment portion (120) and has the same design as the cooling passage (101) of the turbine disc root attachment region (100).

10. A method according to claim 8 or claim 9, wherein the method further comprises the step of flowing cooling air through the cooling passage(s) (134, 136) during the fatigue test.

11. A method of testing according to claim 10, wherein the test piece (110) is heated during the fatigue test.

12. A method of testing according to any preceding claim, wherein the test piece (110) and the first receiving part (114) are integrally formed by an additive manufacturing process.

13. A method of manufacturing a rotor component for a turbo machine, comprising:
a method of testing according to any preceding claim; and
manufacturing the rotor component according to the rotor component design.

14. A test piece assembly for testing a rotor component design,
the rotor component design comprising
a rotor blade having a root portion (106);
the test piece (110) assembly comprising :
a rotor blade test piece (110) having
a test piece root portion (112)
which has the same design as the root portion (106) of the rotor blade (100); and
a test piece tool body (116) coupled to the test piece root portion (112).

15. A test piece assembly as claimed in claim 14, wherein :
the rotor component design further comprises a turbine disc design (90);
the first receiving part (114) comprises :
a test piece root attachment region (120) to receive the test piece root portion (112)
having the same design as a root attachment region (109) on the turbine disc design (90) configured to receive the rotor blade (100); and
a receiving part tool body (122) extending from the root attachment region (120).
